# EUROPEAN PATENT SPECIFICATION

(11) **EP 1 692 992 B1**
(45) Date of publication and mention of the grant of the patent: **11.04.2012**
(21) Application number: 05109322.7
(22) Date of filing: 07.10.2005
(51) Int. Cl.: A47L 9/16

(54) **Dust collector for vacuum cleaner**
Staubsammler für Staubsauger
Collecteur de poussières pour aspirateur

(30) Priority: 17.02.2005 KR 2005013200
(43) Date of publication of application: 23.08.2006
(73) Proprietor: LG Electronics, Inc., Seoul 150-721 (KR)
(72) Inventor: Yoo, Myung Sig, Gyeongsangnam-do (KR); Yang, Hae Seock, Changwon-si Gyeongsangnam-do (KR); Lee, Sang In, Gimhae-si, Gyeongsangnam-do (KR); Koh, Moo Hyon, Changwon-si Gyeongsangnam-do (KR); Park, Jae Yong, Changwon-si Gyeongsangnam-do (KR)
(74) Representative: Henkel, Breuer & Partner

(56) References cited:
- WO-A-02/067742
- US-A1- 2003 084 536
- US-A1- 2005 050 864
- US-B1- 6 782 585

## Description

### BACKGROUND OF THE INVENTION

### Field of the Invention

The present invention relates to a vacuum cleaner, and more particularly, to a dust collector for a vacuum cleaner according to the preamble portion of claim 1 which collects contaminants, utilizing the cyclone principle.

### Discussion of the Related Art

A cyclone dust collector is an appliance which collects contaminants such as dust entrained in air, utilizing the cyclone principle. Such a cyclone dust collector may be applied to diverse fields, and is mainly applied to vacuum cleaners, for domestic purposes.

Recently, a multi-cyclone dust collector has been proposed, which includes a plurality of cyclones to achieve an enhancement in dust collecting performance.

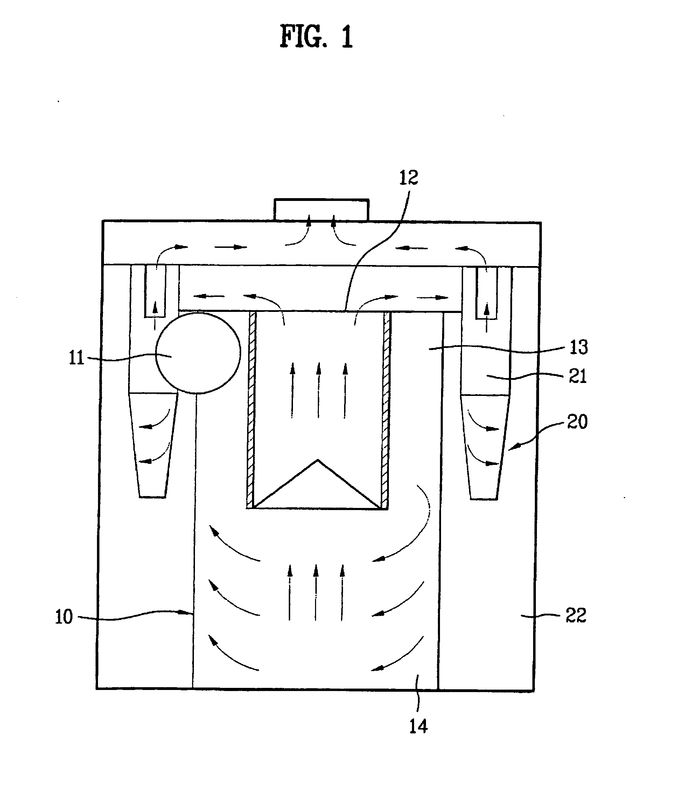

Hereinafter, a conventional dust collector applied to a vacuum cleaner will be described with reference to FIG. 1.

The conventional dust collector includes a primary cyclone dust collecting part 10, which sucks dirt-laden air from the outside of the dust collector, and collects dust of a relatively large grain size from the sucked air. The dust collector also includes a secondary cyclone dust collecting part 20, which is connected to the primary cyclone dust collecting part 10, and collects dust of a relatively small grain size from the sucked air.

The primary cyclone dust collecting part 10 includes a cylindrical container having a lower end disposed to be in close contact with the bottom of the dust collector. The primary cyclone dust collecting part 10 also includes a first air inlet 11 formed through an upper portion of a peripheral wall of the cylindrical container at one side of the cylindrical container to receive dirt-laden air in a tangential direction, and a first air outlet 12 centrally formed through an upper end of the cylindrical container to discharge the air, which has been primarily cleaned.

Thus, the upper space of the primary cyclone dust collecting part 10 forms a primary cyclone 13 for performing separation of contaminants from dirt-laden air, using centrifugal force, whereas the lower space of the primary cyclone dust collecting part 10 forms a primary dust storage 14 for storing the centrifugally-separated contaminants.

The secondary cyclone dust collecting part 20 includes a plurality of small secondary cyclones 21 circumferentially arranged around the upper portion of the primary cyclone dust collecting part 10, and a secondary dust storage 22 for storing dust separated in the secondary cyclones 21.

The secondary dust storage 22 is arranged beneath the secondary cyclones 21. The primary and secondary dust storages 14 and 22 are partitioned by the peripheral wall of the primary cyclone dust collecting part 10.

Accordingly, air discharged from the first air outlet 12 is introduced into the secondary cyclone 21, and is upwardly discharged from the dust collector after being subjected to the secondary dust separation process.

In addition, a separate top cover (not shown) is mounted to the top of the above-mentioned conventional dust collector. A dust collector handle is provided at the top cover to allow the user to easily perform assembly and disassembly of the dust collector.

However, the above-mentioned conventional dust collector has a problem in that the lower end of the dust collecting container may be deformed due to the pressure of air discharged from the dust collecting container.

WO02/067742 A, on with the preamble portion of claim 1 is based discloses a dust collector for a vacuum cleaner which has a primary cyclone arranged in a lower part of a dust collecting container and plural secondary cyclones arranged on top of the dust collecting container. The secondary dust storing section for storing the particles separated in the secondary cyclones is arranged in the center of the dust collecting container and the dust collector has a bottom panel which has a raised central section.

US 2003/084536 A1 discloses another dust collector of a vacuum cleaner working under the cyclonic principle.

EP 1679026 A2 is prior art in accordance with Art.54(3) EPC and discloses a dust collector of a vacuum cleaner in which a boundary wall partitions a main dust chamber and a supplementary dust chamber in a dust collecting container and a bottom end of this boundary wall rests against an inner surface of a lower panel forming the bottom of the dust collecting container.

### SUMMARY OF THE INVENTION

Accordingly, the present invention is directed to a dust collector of a vacuum cleaner that substantially obviates one or more problems due to limitations and disadvantages of the related art.

An object of the present invention is to provide a dust collector of a vacuum cleaner which is capable of preventing deformation of a dust collecting container.

To achieve this object and other advantages the invention provides a dust collector of a vacuum cleaner with the features of claim 1.

The deformation preventing portion may be arranged at a central portion of the bottom panel, and is upwardly protruded toward the dust storing part.

The deformation preventing portion may have an upper surface which is downwardly concave toward a center of the deformation preventing portion.

The dust collector further comprises a sealing member for providing a sealing effect between the primary dust storing section and the second dust storing section.

The sealing member may be separably mounted around the deformation preventing portion. The sealing member may also have an annular shape.

The sealing member is pressed against a boundary wall adapted to partition the primary dust storing section and the secondary dust storing section, so that the sealing member seals the primary dust storing section and the secondary dust storing section.

The sealing member may be arranged at the bottom panel, and adapted to seal the dust storing part.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a longitudinal sectional view schematically illustrating a conventional dust collector;

FIG. 2 is a perspective view illustrating a dust collector according to an embodiment of the present invention, which is separated from a cleaner body;

FIG. 3 is a perspective view illustrating an exploded state of the dust collector according to the embodiment of the present invention;

FIG. 4 is a longitudinal sectional view schematically illustrating the dust collector according to the embodiment of the present invention;

FIG. 5 is a perspective view illustrating a bottom panel and a sealing member according to the present invention; and

FIG. 6 is a sectional view illustrating the bottom panel, to which the sealing member according to the present invention is mounted.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

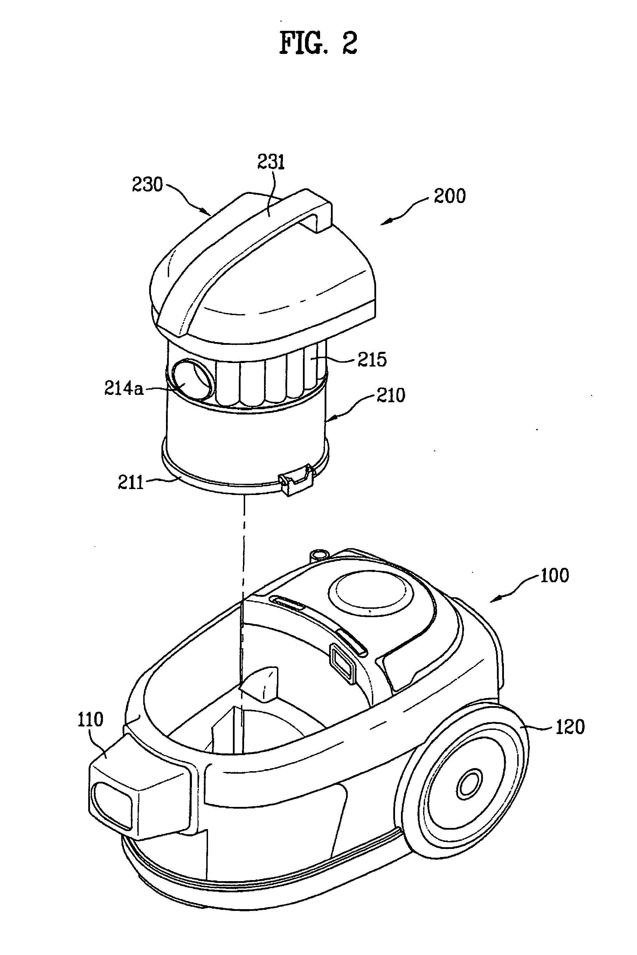

Hereinafter, a vacuum cleaner, in which a dust collector according to an embodiment of the present invention is incorporated, will be described with reference to FIG. 2.

The vacuum cleaner includes a suction nozzle (not shown) which sucks air containing contaminants while moving along a floor to be cleaned, a cleaner body 100 which is separate from the suction nozzle, and a connecting hose (not shown) which connects the suction nozzle and cleaner body 100, and guides dirt-laden air sucked through the suction nozzle to the cleaner body 100.

A suction inlet having a certain size is formed at the bottom of the suction nozzle to suck air containing contaminants including dust. The suction of air through the nozzle suction inlet is achieved by a suction force generated from an air sucking device disposed in the cleaner body 100.

In the cleaner body 100, electronic elements (not shown) adapted to control the vacuum cleaner, and a fan-motor assembly (not shown) constituting the air sucking device are disposed.

In detail, a hose connector 110, to which the connecting hose is connected, is provided at a front upper portion of the cleaner body 100. Wheels 120 are rotatably mounted to opposite sides of a rear portion of the cleaner body 100, respectively, to enable the cleaner body 100 to smoothly move on a floor. A freely rotatable caster (not shown) is mounted to a front portion of the bottom of the cleaner body 100 to enable the cleaner body 100 to freely change the movement direction thereof.

Meanwhile, a dust collector 200 is separably mounted to the cleaner body 100. The dust collector 200 functions to separate contaminants from air sucked into the interior of the dust collector 200 via the suction nozzle and connecting hose, and to collect the separated contaminants.

The air, which emerges from the dust collector 200, is outwardly discharged from the rear portion of the cleaner body 100 after passing through a certain flow path defined in the cleaner body 100 and the fan-motor assembly (not shown).

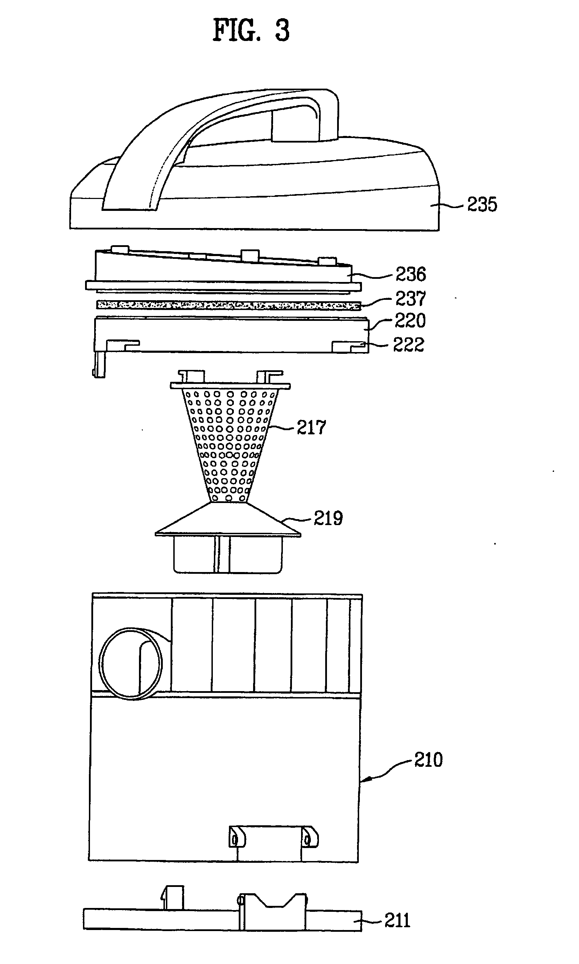

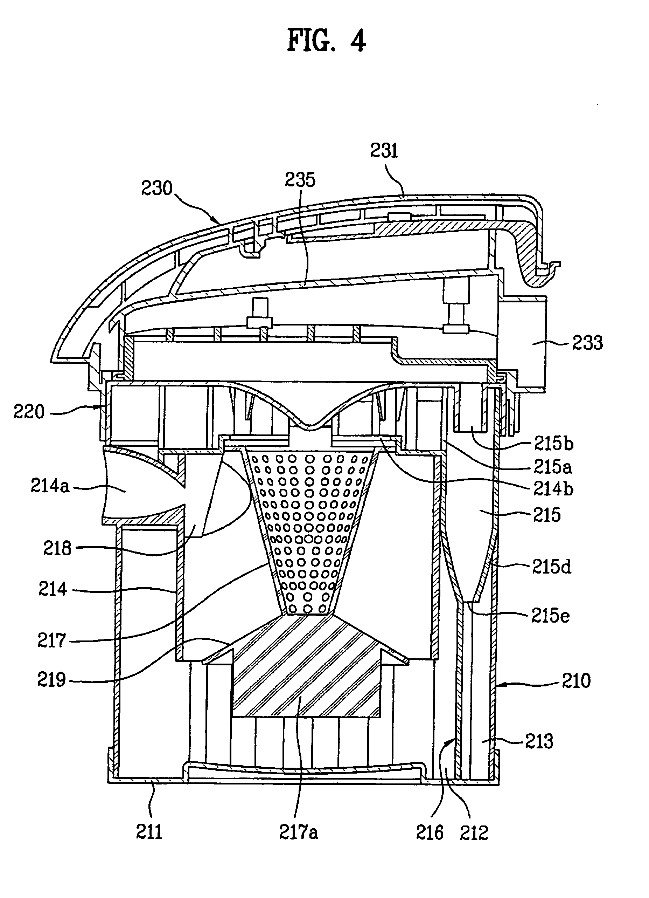

The dust collector 200 of the vacuum cleaner according to the present invention will now be described in detail with reference to FIGs. 3 and 4.

The dust collector 200 includes a dust collecting container 210 having a dust separating part for separating contaminants from air introduced into the dust collecting container 210, and a dust storing part for collecting the contaminants separated by the dust separating part, and a top cover 230 separably coupled to the dust collecting container 210.

In detail, the dust collecting container includes primary and secondary dust collecting parts for collecting contaminants such as dust. The dust collecting container 210 also includes a bottom panel 211 which constitutes the bottom of the dust collecting container 210.

The primary dust collecting part includes a primary dust separating section, and a primary dust storing section 212 for storing dust separated by the primary dust separating section. The primary dust collecting part is constituted by a substantially cylindrical container arranged in the dust collecting container 210.

The secondary dust collecting part is arranged around the primary dust collecting part. The secondary dust collecting part includes a secondary dust separating section for separating contaminants entrained in air discharged from the primary dust collecting part, and a secondary dust storing section 213 for storing the dust separated by the second dust separating section.

In the illustrated embodiment of the present invention, each of the primary and secondary dust separating sections includes a primary cyclone 214 and a plurality of small secondary cyclones 215, which perform separation of contaminants in a cyclone manner.

Specifically, the primary cyclone 214 has a downwardly-opened cylindrical container shape. A first suction port 214a is formed through an upper portion of the primary cyclone 214 at one side of the primary cyclone 214. The first suction inlet 214a communicates with the hose connector 110 (FIG. 2). A first discharge port 214b is formed through the top of the primary cyclone 214 such that the first discharge port 214b extends vertically.

The first suction port 214a guides dirt-laden air introduced into the outside of the dust collector to flow in a tangential direction of the primary cyclone 214 so that the air entering the first suction port 214a flows spirally along an inner wall surface of the primary cyclone 214.

The small secondary cyclones 215 are arranged at the upper portion of the primary cyclone 214, and have peripheral walls formed integrally with a peripheral wall of the dust collecting container 210, respectively. In particular, the secondary cyclones 215 are circumferentially arranged around the upper portion of the primary cyclone 214. Each secondary cyclone 215 has an upper end upwardly protruded to a level higher than that of the upper end of the primary cyclone 214.

The peripheral wall of each secondary cyclone 215 is vertically cut out at a region where the peripheral wall is upwardly protruded above the upper end of the primary cyclone 214, thereby forming a second suction port 215a communicating with the first discharge port 214b. The second suction port 215a of each secondary cyclone 215 guides air emerging from the first discharge port 214b to flow in a tangential direction of the secondary cyclone 215 so that the air entering the second suction port 215a flows spirally along an inner wall surface of the secondary cyclone 215.

Each secondary cyclone 215 also has a conical portion 215d formed at a lower portion of the secondary cyclone 215 such that the conical portion 215d has a diameter gradually reduced as the conical portion 215d extends toward the bottom of the dust collecting container 210. A contaminants discharge port 215e is formed at a lower end of each secondary cyclone 215 to downwardly discharge contaminants such as dust.

The secondary cyclones 215 have an integrated structure such that adjacent ones of the secondary cyclones 215 are in contact with each other to prevent air from being leaked between the adjacent secondary cyclones 215. The dust collecting container 210 may further include a container cover 220 mounted to the upper end of the dust collecting container 210 to open or close the upper ends of the secondary cyclones 215. The container cover 220 more smoothly guides air emerging from the first discharge port 214b to the secondary cyclones 215. Second discharge ports 215b are formed at the container cover 220 along the peripheral portion of the container cover 220 to discharge air from the secondary cyclones 215, respectively.

Dust separated in the primary cyclone 214 and second cyclones 215, which have the above-described configurations, respectively, is stored in the dust storing part defined by the peripheral wall of the dust collecting container 210 and the bottom panel 211. The stored dust is subsequently outwardly discharged by virtue of gravity when the bottom panel 211 is opened.

The dust storing part is constituted by the primary dust storing section 212 and secondary dust storing section 213. The primary dust storing section 212 stores dust separated by the primary cyclone 214, and the secondary dust storing section 213 stores dust separated by the secondary cyclones 215.

The primary dist storing section 212 and secondary dust storing sections 213 are partitioned by a substantially cylindrical boundary wall 216, which is integrally connected to the lower ends of the secondary cyclones 215, and has a diameter smaller than that of the peripheral wall of the dust collecting container 210.

The boundary wall 216 has a lower end extending downward to the bottom of the dust collecting container 210, that is, the upper surface of the bottom panel 211, beyond the lower end of the primary cyclone 214. Accordingly, the boundary wall 216 prevents the primary and secondary dust storing sections 212 and 213 from communicating with each other.

It is preferred that the boundary wall 216 have a circumferentially corrugated shape, in order to prevent the dust stored in the primary dust storing section 212 from floating due to a spiral air flow formed in the primary cyclone 214.

In addition to the above-described configuration, the dust collector according to the illustrated embodiment of the present invention further includes a discharge member 217 arranged in the primary cyclone 214 such that the discharge member 217 extends vertically. A plurality of holes are formed at a peripheral wall of the discharge member 217, in order to allow the discharge member 217 to communicate with the first discharge port 214b of the primary cyclone 214. The dust collector also includes a guide rib 218 provided at the primary cyclone 214, and adapted to guide air entering the first suction port 214a.

It is preferred that the discharge member 217 be centrally arranged in the primary cyclone 214, extend axially through the primary cyclone 214, and have a substantially conical structure having an opened upper end and a closed lower end while having a diameter gradually reduced as the discharge member 217 extends downward. When the discharge member 217 has such a structure, it is possible to prevent dust moving downward along the inner peripheral wall surface of the primary cyclone 214 from being influenced by a suction force exerted in the discharge member 217, because the velocity of the spiral air flow in the primary cyclone 214 is gradually reduced toward the lower end of the primary cyclone 214.

The upper end of the discharge member 217 is separably coupled with the peripheral edge of the first discharge port 214b. An annular sealing member, which provides a sealing effect, is interposed between the upper end of the discharge member 217 and the first discharge port 214b.

A floatation prevention member 219 may also be mounted to the lower end of the discharge member 217, in order to prevent dust stored in the primary dust storing section 212 from floating. The floatation prevention member 219 prevents the dust collected in the primary dust storing section 212 from rising due to the spiral air flow, and thus, from entering the secondary cyclones 215.

For such a function, it is preferred that the floatation prevention member 219 have a radially-extending structure formed integrally with the lower end of the discharge member 217. It is also preferred that the floatation prevention member 219 has a downwardly-inclined upper surface. Specifically, the floatation prevention member 219 has a conical structure having a diameter gradually increased as the floatation prevention member 219 extends downward.

The guide rib 218 guides air entering the first suction port 214a to flow in a direction tangential to the inner peripheral wall surface of the primary cyclone 214. That is, the guide rib 218 prevents the air entering the first suction port 214a from being directly introduced into the discharge member 217.

Meanwhile, the top cover 230 includes a cover housing 235 provided with a dust collector handle 231 adapted to enable the user to carry the dust collector, and a filter housing 236 disposed in the cover housing 235. The top cover 230 is separably coupled to the container cover 220.

A filter is arranged in the filter housing to filter air discharged from the discharge ports 215b of the dust collecting container 210. Engagement grooves are formed at the inner peripheral surface of the filter housing 236. These engagement grooves are engagable with protrusions 222 formed at the outer peripheral surface of the container cover 220, respectively.

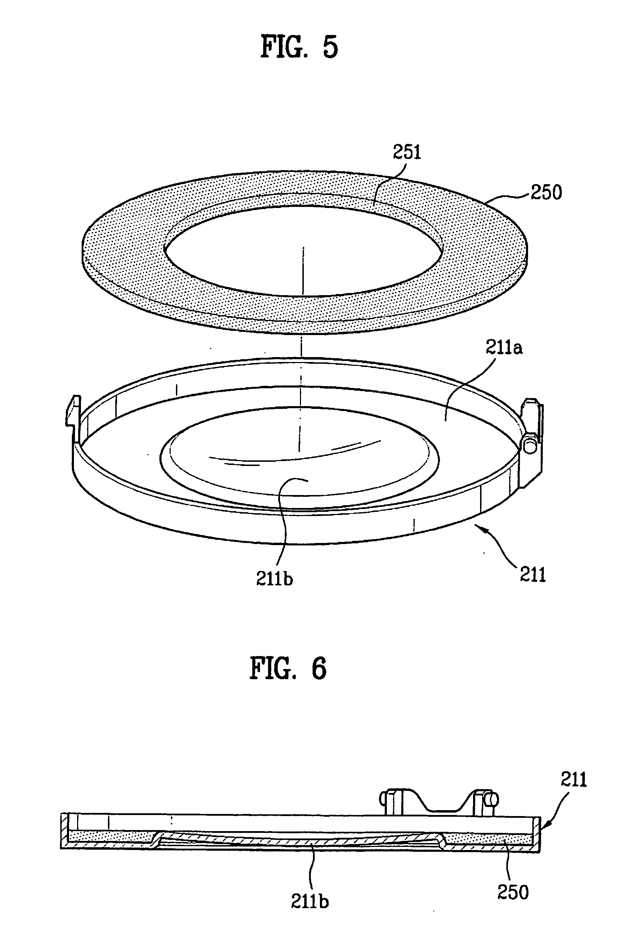

Hereinafter, the structure of the bottom panel according to the present invention will be described in detail with reference to FIGs. 5 and 6. The lower panel 211 is mounted to the lower end of the dust collecting container 210 to open or close the bottom of the dust collecting container 210. The lower panel 211 includes a deformation preventing portion 211b for preventing the bottom panel 211 from being deformed, and a sealing member mounting portion 211a formed around the deformation preventing portion 211b.

The deformation preventing portion 211b is protruded to a certain height from the bottom of the bottom panel 211 toward the dust storing part. The deformation preventing portion 211b has an upper surface having a certain inclination. Specifically, the upper surface of the deformation preventing portion 211b is downwardly concave toward the center of the deformation preventing portion 211b.

Such a shape of the upper surface of the deformation preventing portion 211b functions to prevent the bottom panel 211 from being deformed due to the pressure of air upwardly discharged from the dust collecting container 210 during operation of the dust collector. Although the deformation preventing portion 211b has been described as being formed at a central portion of the bottom panel 211 while having an inclined upper surface, the upper surface of the deformation preventing portion 211b may be flat without having an inclination, or may be upwardly convex toward the center of the deformation preventing portion 211b.

A sealing member 250 is fitted in the sealing member mounting portion 211a of the bottom panel 211 to provide a seal effect between the primary and secondary dust storing sections 212 and 213 of the dust collecting container 210. In detail, the sealing member 250 is pressed against the lower end of the boundary wall 216 partitioning the primary and secondary dust storing sections 212 and 213, thereby sealing the primary and secondary dust storing sections 212 and 213.

The sealing member 250 is arranged around the deformation preventing portion 211b, and has a fitting hole 251, in which the deformation preventing portion 211b is fitted.

Specifically, the sealing member has an annular shape, and is separably fitted in the sealing member mounting portion 211a. Of course, the sealing member 250 may be attached to the bottom panel 211 by means of an adhesive. Preferably, the sealing member 250 is made of an elastic material, in particular, synthetic resin. Also, the sealing member 250 may have any shape, for example, a polygonal shape, so long as the shape of the sealing member 250 conforms to the shape of the deformation preventing portion 211b.

Operation of the vacuum cleaner, in which the dust collector according to the illustrated embodiment of the present invention is incorporated, will now be described with reference to FIGs. 3 to 6.

When the vacuum cleaner operates, dirt-laden ambient air is first introduced into the primary cyclone 214 via the suction nozzle (not shown) and connecting hose (not shown). The air introduced into the primary cyclone 214 is guided by the guide rib 218 to flow in a direction tangential to the inner peripheral surface of the primary cyclone 214 without being directly introduced into the discharge member 217, thereby forming a spiral flow.

As a result, relatively heavy and large dust is separated from the air in accordance with the cyclone principle, and is then stored in the primary dust storing section 212 after falling downward. The dust stored in the primary dust storing section 212 is prevented from floating in accordance with the functions of the floatation prevention member 219 and corrugated boundary wall 216.

The air, from which relatively heavy and large dust has been separated, is discharged from the primary cyclone 214 through the first discharge port 214b communicating with the holes formed at the peripheral wall of the discharge member 217. The air is then introduced into the secondary cyclones 215 so that the air is again subjected to a dust separation process, in order to separate relatively light and fine dust from the air.

The air, from which relatively light and fine dust has been separated in the secondary cyclones 215, is introduced into the interior of the top cover 230 through the second discharge ports 215b. The air introduced into the interior of the top cover 230 is filtered by the filter 237, and is then rearwardly discharged through a cover discharge port 233 formed at the top cover 230. The air emerging from the cover discharge port 233 is outwardly discharged from the cleaner body 100 after moving along a predetermined flow path defined in a rear portion of the cleaner body 100.

The above-described dust collector of the vacuum cleaner according to the present invention has various effects.

That is, first, in accordance with the present invention, there is an advantage in that it is possible to prevent the dust collecting container from being deformed because the bottom panel included in the dust collecting container has an improved structure.

Second, in accordance with the present invention, there is an advantage in that it is possible to enhance the dust collecting performance of the dust collector by virtue of the provision of the sealing member adapted to provide a sealing effect between the primary and secondary dust storing sections.

## Claims

1. A dust collector for a vacuum cleaner comprising:
a dust separating part including a primary cyclone (214) for separating contaminants from air introduced into the dust separating part, and at least one secondary cyclone (215) for separating contaminants entrained in the air discharged from the primary cyclone (214);
a dust storing part including a primary dust storing section (212) for storing the contaminants separated in the primary cyclone (214), and a secondary dust storing section (213) for storing the contaminants separated in the secondary cyclone(s) (215);
a dust collecting container (210), in which the dust storing part and the dust separating part are arranged, the dust collecting container (210) including an air discharging part arranged at a top portion of the dust collecting container (210);
a bottom panel (211) which includes a deformation preventing portion (211b) for preventing the dust collecting container (210) from being deformed, and forms a bottom of the dust storing part, the bottom panel (211) being mounted to a lower end of the dust collecting container (210) to open or close a bottom of the dust collecting container (210); and
a sealing member (250) for providing a sealing effect between the primary dust storing section (212) and the second dust storing section (213); **characterized in that**
the primary cyclone (214) has a downwardly opened cylindrical container shape, and
the secondary cyclone(s) (215) has/have a peripheral wall integrally formed with a peripheral wall of the dust collecting container (210) and is/are circumferentially arranged around the primary cyclone (214);
wherein
the sealing member (250) is pressed against a boundary wall (216) partitioning the primary dust storing section (212) and the secondary dust storing section (213), so that the sealing member (250) seals the primary dust storing section (212) and the secondary dust storing section (213).

2. The dust collector according to claim 1, wherein the deformation preventing portion (211b) is arranged at a central portion of the bottom panel (211), and is upwardly protruded toward the dust storing part.

3. The dust collector according to claim 1 or 2, wherein the deformation preventing portion (211b) has an upper surface which is downwardly concave toward a center of the deformation preventing portion (211b).

4. The dust collector according to any one of claims 1 to 3, wherein the sealing member (250) is separably mounted around the deformation preventing portion (211b).

5. The dust collector according to any one of claims 1 to 4, wherein the sealing member (250) has an annular shape.

6. The dust collector according to claim 1, wherein the sealing member (250) is arranged at the bottom panel (211) and is adapted to seal the dust storing part.

## Patentansprüche

1. Ein Staubsammler für einen Staubsauger mit:
einem Staubtrennelement das ein Primärzyklon (214) zum Abtrennen von Schmutzstoffen von in das Staubtrennelement eingebrachter Luft, und mindestens ein Sekundärzyklon (215) zum Abtrennen von Schmutzstoffen, die in der Luft mitgerissen wurden, welche aus dem Primärzyklon (214) ausgetragen wurde aufweist,
einem Staubspeicherelement, das einen Primär-Staubspeicherabschnitt (212) zum Speichern der Schmutzstoffe, die in dem Primärzyklon (214) abgetrennt wurden, und einen Sekundär-Staubspeicherabschnitt (213) zum Speichern der Schmutzstoffe, die in der/den Sekundärzyklon(en) (215) abgetrennt wurden aufweist,
einem Staubsammelbehälter (210), in welchem das Staubspeicherelement und das Staubtrennelement angeordnet sind, wobei der Staubsammelbehälter (210) ein Luftaustragselement aufweist, welches an einem oberen Teil des Staubsammelbehälters (210) angeordnet ist,
einem Boden-Panel (211), welches einen Deformation verhindernden Teil (211b) aufweist, um zu verhindern dass der Staubsammelbehälter (210) deformiert wird, und welches einen Boden des Staubspeicherelements bildet, wobei das Boden-Panel (211) an einem unteren Ende des Staubsammelbehälters (210) befestigt ist, um einen Boden des Staubsammelbehälters (210) zu öffnen oder zu schließen, und
einem Dichtungselement (250), welches eine Dichtungswirkung zwischen dem Primär-Staubspeicherabschnitt (212) und dem Sekundär-Staubspeicherabschnitt (213) vorsieht;
**dadurch gekennzeichnet, dass**
das Primärzyklon (214) eine abwärts geöffnete zylindrische Behälterform aufweist, und
das/die Sekundärzyklon(e) (215) eine Umfangswand aufweist/aufweisen, die integral mit einer Umfangswand des Staubsammelbehälters (210) ausgebildet ist, und die umfangsmäßig um das Primärzyklon (214) herum angeordnet ist/sind,
wobei das Dichtungselement (250) gegen eine Begrenzungswand (216) gepresst ist, die den Primär-Staubspeicherabschnitt (212) und den Sekundär-Staubspeicherabschnitt (213), voneinander trennt, so dass das Dichtungselement (250) den Primär-Staubspeicherabschnitt (212) und den Sekundär-Staubspeicherabschnitt (213) abdichtet.

2. Der Staubsammler gemäß Anspruch 1, wobei der Deformation-verhindernde Teil (211b) an einem zentralen Teil des Boden-Panels (211) angeordnet ist, und aufwärts in Richtung des Staubspeicherelements vorsteht.

3. Der Staubsammler gemäß Anspruch 1 oder 2, wobei der Deformation-verhindernde Teil (211b) eine obere Oberfläche hat, welche abwärts konkav in Richtung eines Zentrums des Deformation-verhindernden Teils ausgestaltet ist (211b).

4. Der Staubsammler gemäß einem der Ansprüche 1 bis 3, wobei das Dichtungselement (250) separierbar um den Deformation-verhindernden Teil (211b) herum angebracht ist.

5. Der Staubsammler gemäß einem der Ansprüche 1 bis 4, wobei das Dichtungselement (250) eine ringförmige Gestalt aufweist.

6. Der Staubsammler gemäß Anspruch 1, wobei das Dichtungselement (250) an dem Boden-Panel (211) angeordnet und angepasst ist, um das Staubspeicherelement abzudichten.

## Revendications

1. Collecteur de poussière pour un aspirateur comprenant:
une partie de séparation de poussière incluant un cyclone primaire (214) pour séparer des contaminants de l'air introduits dans la partie de séparation de poussière, et au moins un cyclone secondaire (215) pour séparer les contaminants entraînés dans l'air évacué du cyclone primaire (214);
une partie de stockage de poussière incluant une section de stockage de poussière primaire (212) pour stocker les contaminants séparés dans le cyclone primaire (214), et une section de stockage de poussière secondaire (213) pour stocker les contaminants séparés dans le ou les cyclones secondaires (215);
un contenant de collecte de poussière (210) dans lequel la partie de stockage de poussière et la partie de séparation de poussière sont agencées, le contenant de collecte de poussière (210) incluant une partie d'évacuation d'air agencée à une portion supérieure du contenant de collecte de poussière (210);
un panneau inférieur (211) qui comprend une portion de prévention de déformation (211b) pour prévenir la déformation du contenant de collecte de poussière (210), et qui forme un fond de la partie de stockage de poussière, le panneau de fond (211) étant monté sur une extrémité inférieure du contenant de collecte de poussière (210) afin d'ouvrir ou de fermer un fond du contenant de collecte de poussière (210); et
un élément d'étanchéité (250) pour réaliser un effet d'étanchéité entre la section de stockage de poussière primaire (212) et la section de stockage de poussière secondaire (213);
**caractérisé en ce que** le cyclone primaire (214) a une forme de contenant cylindrique ouvert vers le bas, et
le ou les cyclones secondaires (215) a/ont une paroi périphérique réalisée intégralement avec une paroi périphérique du contenant de collecte de poussière (210) et est/sont agencés circonférentiellement autour du cyclone primaire (214);
où l'élément d'étanchéité (250) est pressé contre une paroi de délimitation (216) séparant la section de stockage de poussière primaire (212) et la section de stockage de poussière secondaire (213) de sorte que l'élément d'étanchéité (250) rend étanche la section de stockage de poussière primaire (212) et la section de stockage de poussière secondaire (213).

2. Collecteur de poussière selon la revendication 1, dans lequel la portion de prévention de déformation (211b) est agencée à une portion centrale du panneau de fond (211) et fait saillie vers le haut vers la partie de stockage de poussière.

3. Collecteur de poussière selon la revendication 1 ou 2, dans lequel la portion de prévention de déformation (211b) possède une surface supérieure qui est concave vers le bas vers un centre de la portion de prévention de déformation (211b).

4. Collecteur de poussière selon l'une quelconque des revendications 1 à 3, dans lequel l'élément d'étanchéité (250) est monté séparablement autour de la portion de prévention de déformation (211b).

5. Collecteur de poussière selon l'une quelconque des revendications 1 à 4, dans lequel l'élément d'étanchéité (250) a une forme annulaire.

6. Collecteur de poussière selon la revendication 1, dans lequel l'élément d'étanchéité (250) est agencé au panneau de fond (211) et est apte à rendre étanche la partie de stockage de poussière.
